# EUROPEAN PATENT SPECIFICATION

(11) **EP 4 497 535 B1**
(45) Date of publication and mention of the grant of the patent: **25.11.2026**
(21) Application number: 23774367.9
(22) Date of filing: 22.02.2023
(51) Int. Cl.: B23Q 7/00, B23D 47/04, B23D 55/04, B23Q 7/12, B25J 9/16, B65G 1/137, G05B 19/418

(54) **PRODUCT UNLOADING DEVICE OF STEEL CUTTING MACHINE AND PRODUCT UNLOADING METHOD**
PRODUKTENTLADEVORRICHTUNG EINER STAHLSCHNEIDEMASCHINE UND PRODUKTENTLADEVERFAHREN
DISPOSITIF DE DÉCHARGEMENT DE PRODUIT D'UNE MACHINE DE DÉCOUPE D'ACIER ET PROCÉDÉ DE DÉCHARGEMENT DE PRODUIT

(30) Priority: 23.03.2022 JP 2022046937
(43) Date of publication of application: 29.01.2025
(73) Proprietor: Amada Co., Ltd., Isehara-shi, Kanagawa 259-1196 (JP); Amada Machinery Co., Ltd., Kanagawa 259-1196 (JP)
(72) Inventor: AIHARA, Shoji, Isehara-shi, Kanagawa 259-1196 (JP); TOJO, Kuniaki, Isehara-shi, Kanagawa 259-1196 (JP)
(74) Representative: Grünecker Patent- und Rechtsanwälte PartG mbB
(86) International application number: PCT/JP2023/006462
(87) International publication number: WO 2023/181768

(56) References cited:
- CN-A- 108 202 328
- JP-A- 2000 005 964
- JP-A- 2000 005 964
- JP-A- 2002 273 638
- JP-A- 2005 145 578
- JP-A- H04 283 038
- JP-A- H05 178 461
- US-A1- 2020 270 071
- US-A1- 2022 016 779

## Description

### [TECHNICAL FIELD]

The present disclosure relates to a product carrying-out device and a product carrying-out method for a steel material cutting machine.

### [BACKGROUND ART]

In processing of cutting a steel material, a steel material cutting machine cuts a bar-shaped steel material to make a product, and then a product carrying-out device carries out the made product onto a predetermined pallet. After that, an operator transports the product carried out onto the pallet to a corresponding delivery destination.

### [Citation List]

### [Patent Literature]

**[Patent Literature 1]** Japanese Patent Application Laid-Open Publication No. 2000-5964

Patent Literature JP 2000 005964 A relates to a product carrying-out method to automate the sorting and unloading of products processed by a machine. A control device calculates and determines the optimal carrying-out positions and orientations for products on a pallet. The calculation aims to maintain a predetermined space between products and minimize the overall occupied area. The system sequentially determines positions for subsequent products.

Patent Literature US 2022016779 A1 discloses an autonomous robot packaging system. The system senses measurements of objects, obtains three-dimensional models for them, determines a packing plan, and uses a robotic arm to load objects into a container according to the plan. Furthermore, the system is configured to sense the content placement within the container, determine any deviation from the packing plan, and then either correct the deviation by moving the object or adjust the remainder of the packing plan accordingly.

Patent Literature US 2020270071 A1 discloses a robotic system for palletizing and depalletizing items. The system receives data related to items for stacking, generates a plan, and implements this plan using a robotic arm. The implementation involves using first order sensors for approximate item placement and second order sensors to "snug" the item into its final position. The system also determines and responds to stack instability by using its sensors to identify unstable conditions and then repositioning items to resolve the instability.

Patent Literature CN 108 202 328 A discloses a robotic device and a method for picking and placing an object based on visual recognition. The method involves collecting the shape and size of an object, establishing a digital model, determining the position of its center of gravity, and determining an optimal placement surface based on these factors. This optimal placement surface is used to place the object on a target position.

### [SUMMARY OF INVENTION]

The invention is set out in the appended set of claims

The size of the product (cutting length of the steel material) made by the steel material cutting machine varies depending on the delivery destination of the product.
Accordingly, when carrying out the cut product onto the pallet by the product carrying-out device, products having different sizes may be mixed. In a case where products having different sizes are mixed in the pallet, the operator is required to sort the products for each delivery destination when he/she performs a transportation work of the products, and there has been a problem of taking time and effort.

In order to solve this problem, the inside of the pallet corresponding to the carrying-out destination of the product is divided into plural areas, and the product carrying-out device sorts and carries out the cut products to different areas for every slip of the delivery destinations, so that the operator's time and effort for the transportation work can be reduced. However, in this case, every time the cutting length of the steel material cut by the steel material cutting machine changes, the operator is required to set position information on the carrying-out destination of the product to the product carrying-out device and thus the processing becomes complicated.

The invention is set out in the appended set of claims.

### [BRIEF DESCRIPTION OF DRAWINGS]

[FIG. 1] FIG. 1 is an overall view illustrating a configuration of a cutting system using a product carrying-out device for a steel material cutting machine of one
   embodiment.
[FIG. 2] FIG. 2 is a view as viewed from above of a first cutting unit and a second cutting unit of the product carrying-out device of one embodiment.
[FIG. 3A] FIG. 3A is a view as viewed from above of a state of installing, on a pallet P corresponding to a carrying-out destination of a product carried out by the product carrying-out device of one embodiment, six container boxes B1 formed to conform to shapes of respective areas obtained by dividing the pallet P into six areas.
[FIG. 3B] FIG. 3B is a view as viewed from above of a state of installing, on the pallet P corresponding to the carrying-out destination of the product carried out by the product carrying-out device of one embodiment, nine container boxes B2 formed to conform to shapes of respective areas obtained by dividing the pallet P into nine areas.
[FIG. 3C] FIG. 3C is a view as viewed from above of a state of installing, on the pallet P corresponding to the carrying-out destination of the product carried out by the product carrying-out device of one embodiment, twelve container boxes B3 formed to conform to shapes of respective areas obtained by dividing the pallet P into twelve areas.
[FIG. 4] FIG. 4 is a block diagram illustrating a configuration of an NC device used by the product carrying-out device of one embodiment.
[FIG. 5] FIG. 5 is a view as viewed from above of the six container boxes B1 (B1-1 to B1-6) installed on a pallet P1 corresponding to the carrying-out destination of the product carried out by the product carrying-out device of one embodiment.
**[****FIG.** 6] FIG. 6 is a flow chart illustrating processes for determining carrying-out positions of the cut products by the product carrying-out device according to one embodiment.
[FIG. 7A] FIG. 7A illustrates an example of a product that can be laid stably to be carried out by the product carrying-out device according to one embodiment.
[FIG. 7B] FIG. 7B illustrates an example of a product that cannot be laid stably to be carried out by the product carrying-out device according to one embodiment.
[FIG. 8A] FIG. 8A is a view as viewed from above of an example of the carrying-out positions of the products that can be laid stably, which is determined by the product carrying-out device according to one embodiment with respect to a bottom of the container box.
[FIG. 8B] FIG. 8B is a view as viewed from above of an example of the carrying-out positions of the products that cannot be laid stably, which is determined by the product carrying-out device according to one embodiment with respect to the bottom of the container box.
[FIG. 9A] FIG. 9A is a view as viewed from the side of an example of the carrying-out positions of the products that can be laid stably, which is determined by the product carrying-out device according to one embodiment with respect to the container box.
[FIG. 9B] FIG. 9B is a view as viewed from the side of an example of the carrying-out positions of the products that cannot be laid stably, which is determined by the product carrying-out device according to one embodiment with respect to the container box.

### [DESCRIPTION OF EMBODIMENTS]

### <Configuration of Cutting System ST Using Product Carrying-Out Device for Steel Material Cutting Machine According to One Embodiment>

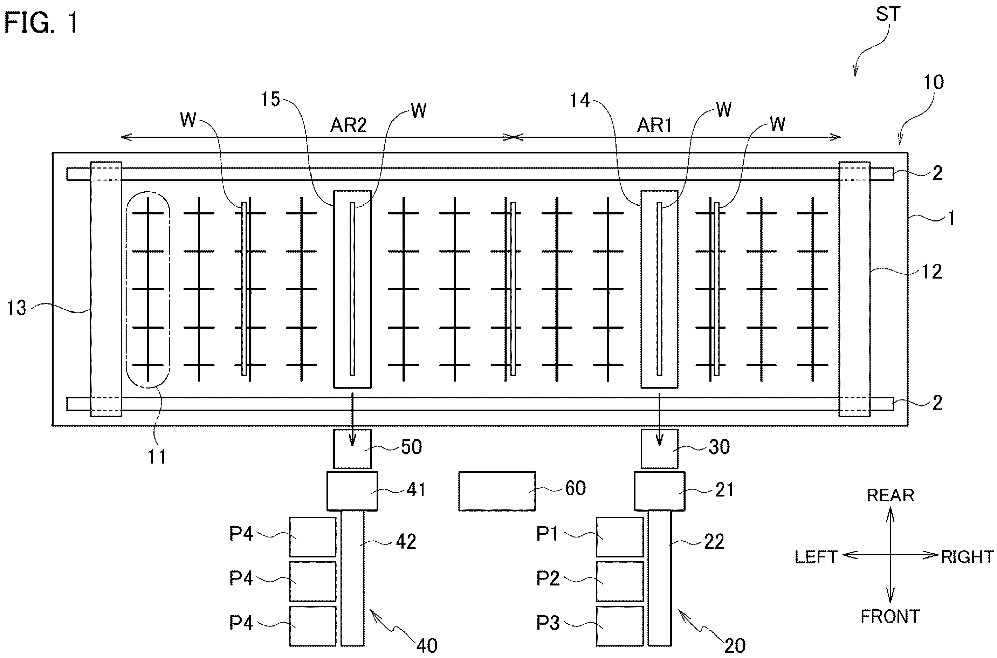

A configuration of a cutting system ST using a product carrying-out device for a steel material cutting machine of one embodiment is hereinafter described with reference to the accompanying drawings. FIG. 1 is an overall view illustrating the configuration of the cutting system ST. The cutting system ST cuts a cylindrical steel material (workpiece W) into a predetermined length to achieve a product. The cutting system ST sorts and carries out the products for each place of destination.

The cutting system ST includes a shelf device 10, a first cutting unit 20, a first relay conveyor 30, a second cutting unit 40, a second relay conveyor 50, and an NC device 60.

The shelf device 10 includes plural support shelves 11 each installed in a front-rear direction on a base portion 1, a first crane 12 and a second crane 13 that are movable on running lanes 2 each installed in a lateral direction, a first supply line 14, and a second supply line 15. The support shelf 11 stores workpieces W to be cut.

The first crane 12 moves in the lateral direction in a predetermined range AR1 on the right side in the shelf device 10 on the running lanes 2. The first crane 12 grips a workpiece W present on the support shelf 11 within the range AR1 to move the workpiece W to the first supply line 14. The second crane 13 moves in the lateral direction in a predetermined range AR2 on the left side in the shelf device 10 on the running lanes 2. The second crane 13 grips a workpiece W present on the support shelf 11 within the range AR2 to move the workpiece W to the second supply line 15.

The first supply line 14 supplies the workpiece W moved by the first crane 12 to the first cutting unit 20 via the first relay conveyor 30. The second supply line 15 supplies the workpiece W moved by the second crane 13 to the second cutting unit 40 via the second relay conveyor 50.

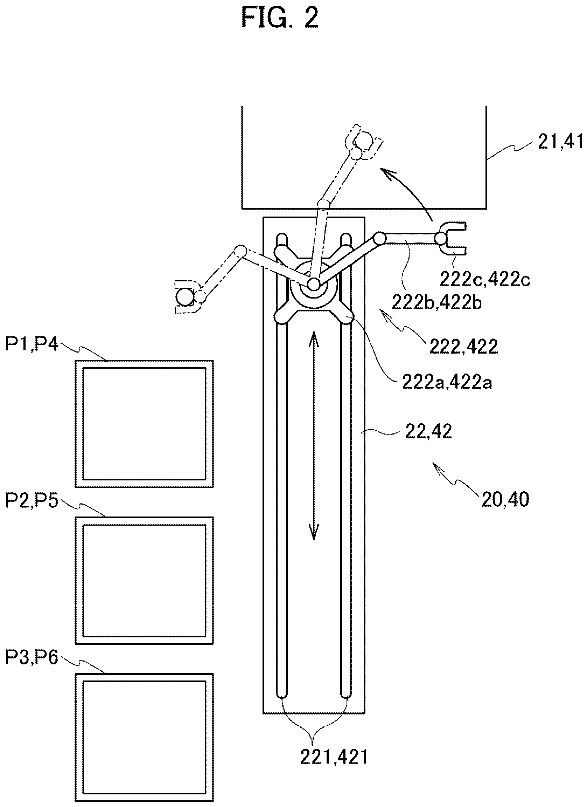

FIG. 2 is a view as viewed from above of the first cutting unit 20 and the second cutting unit 40. The first cutting unit 20 includes a band saw 21 serving as a cutting machine, and a first carrying-out mechanism 22. At positions adjacent to the first carrying-out mechanism 22, pallets P1, P2, and P3 are installed for every place of destination of the products. Container boxes, which are plural storage boxes for storing the cut products, are installed on each of the pallets P1, P2, and P3. The shape of the container box and the number of container boxes to be installed are described later.

The band saw 21 makes products by cutting the workpiece W supplied from the first supply line 14 via the first relay conveyor 30. The first carrying-out mechanism 22 includes first rails 221, and a first conveyance robot 222 configured to be slidably moved in the arrow direction on the first rails 221.

The first conveyance robot 222 includes a first main body portion 222a, a first arm portion 222b connected to the first main body portion 222a, and a first gripping portion 222c installed at a distal end of the first arm portion 222b. The first main body portion 222a is installed on the first rails 221, and slidably moves on the first rails 221. The first arm portion 222b can move, under a state in which its one end is connected to the first main body portion 222a, the first gripping portion 222c installed on its other end in a vertical direction and the lateral direction, and can also rotate it. The first gripping portion 222c grips the product. The first conveyance robot 222 moves the first main body portion 222a on the first rails 221 under a state in which the product made by the band saw 21 is gripped by the first gripping portion 222c. The first conveyance robot 222 operates the first arm portion 222b to carry out the product to a predetermined position in the container box of any one of the pallets P1, P2, and P3.

The second cutting unit 40 includes a circular saw machine 41 serving as a cutting machine, and a second carrying-out mechanism 42. At positions adjacent to the second carrying-out mechanism 42, pallets P4, P5, and P6 corresponding to carrying-out destinations of the cut products are installed for every place of destination of the products. Plural container boxes for storing the products made by a cutting work are installed on the pallets P4, P5, and P6.

The circular saw machine 41 makes products by cutting the workpiece W supplied from the second supply line 15 via the second relay conveyor 50. The second carrying-out mechanism 42 includes second rails 421, and a second conveyance robot 422 configured to be slidably moved in the arrow direction on the second rails 421.

The second conveyance robot 422 includes a second main body portion 422a, a second arm portion 422b connected to the second main body portion 422a, and a second gripping portion 422c installed at a distal end of the second arm portion 422b. The second main body portion 422a is installed on the second rails 421, and slidably moves on the second rails 421. The second arm portion 422b can move, under a state in which its one end is connected to the second main body portion 422a, the second gripping portion 422c installed on its other end in the vertical direction and the lateral direction, and can also rotate it. The second gripping portion 422c grips the product. The second conveyance robot 422 moves the second main body portion 422a on the second rails 421 under a state in which the product made by the circular saw machine 41 is gripped by the second gripping portion 422c. The second conveyance robot 422 operates the second arm portion 422b to carry out the product to a predetermined position in the container box of any one of the pallets P4, P5, and P6.

In this embodiment, the pallets P1, P2, P3, P4, P5, and P6 have the same shape. In the following, when there is no need to specify which of the pallets P1, P2, P3, P4, P5, and P6, the pallet is described as "pallet P."

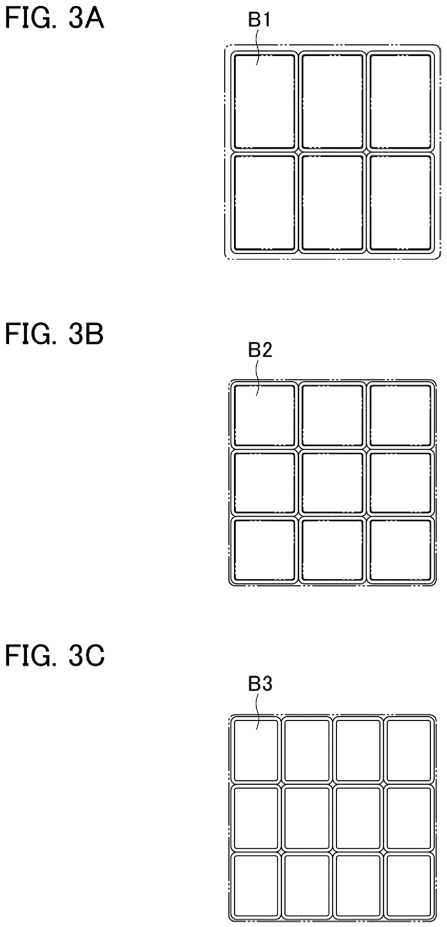

The shape of the container box and the number of container boxes to be installed on the pallet P are described. FIG. 3A is a view as viewed from above of a state of installing, on the pallet P corresponding to the carrying-out destination of the product carried out by a product carrying-out device 70, six container boxes B1 formed to conform to shapes of respective areas obtained by dividing the pallet P into six areas. FIG. 3B is a view as viewed from above of a state of installing, on the pallet P, nine container boxes B2 formed to conform to shapes of respective areas obtained by dividing the pallet P into nine areas. FIG. 3C is a view as viewed from above of a state of installing, on the pallet P, twelve container boxes B3 formed to conform to shapes of respective areas obtained by dividing the pallet P into twelve areas. The container boxes B1, B2, and B3 each have a predetermined height, and are each formed into a box shape having an opened upper portion.

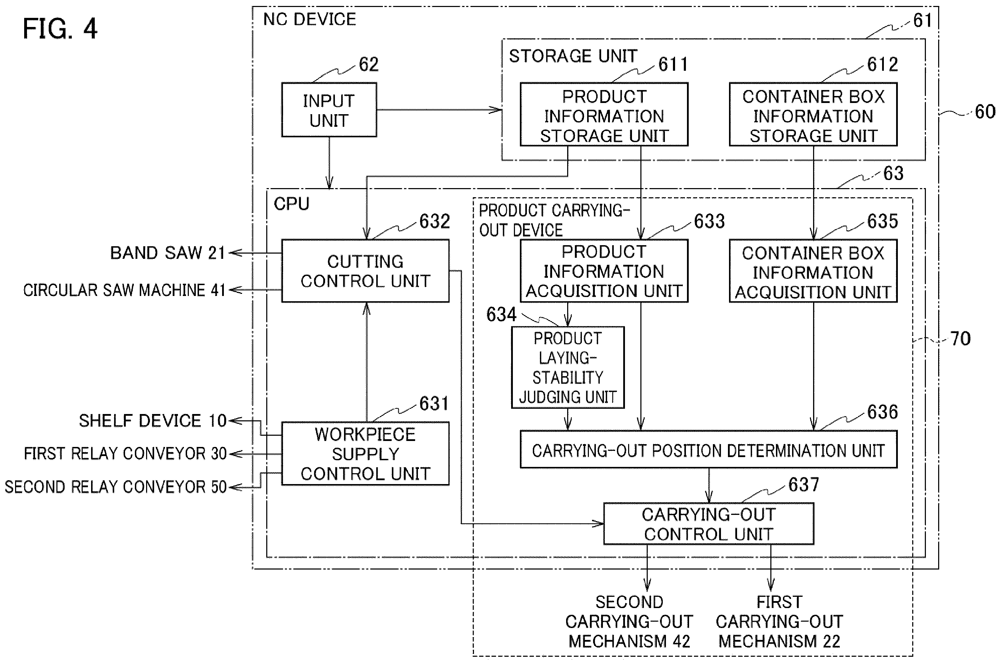

FIG. 4 is a block diagram illustrating a configuration of an NC device 60 used by the product carrying-out device 70. The NC device 60 includes a storage unit 61, an input unit 62, and a central processing unit (CPU) 63. The storage unit 61 includes a product information storage unit 611 and a container box information storage unit 612. The product information storage unit 611 stores information on a product length, a product diameter, and a product weight for each type of product to be processed. The container box information storage unit 612 stores information on a length, a width, and a height indicating effective inside dimensions of each shape of the container box to be used as the carrying-out destination of the product made by the cutting work. Further, the container box information storage unit 612 stores a loading weight upper limit value indicating an upper limit value of a weight loadable on the container box.

The input unit 62 inputs, through operation by a manager or the like, setting information regarding the cutting work or the like.

The CPU 63 includes a workpiece supply control unit 631 and a cutting control unit 632. The workpiece supply control unit 631 outputs, based on a processing program set in advance, an instruction to supply the workpiece W to the first supply line 14 to the first crane 12 of the shelf device 10, or outputs an instruction to supply the workpiece W to the second supply line 15 to the second crane 13. The cutting control unit 632 controls, based on the processing program set in advance, an operation of the cutting work done by the band saw 21 and the circular saw machine 41 with use of the information on the product length of the product to be processed, which is stored in the product information storage unit 611.

Further, the CPU 63 includes: a product information acquisition unit 633 configured to acquire information on a product length, a product diameter, and a product weight of a product made by the cutting work of a steel material cutting machine (band saw 21 or circular saw machine 41); a product laying-stability judgement unit 634 configured to judge, based on the information acquired by the product information acquisition unit 633, whether or not the product can be laid stably under a state in which a cut surface thereof is made perpendicular to a ground surface; a container box information acquisition unit 635 serving as a storage box information acquisition unit configured to acquire information on a shape of a container box corresponding to a carrying-out destination of the product made by the cutting work; a carrying-out position determination unit 636 configured to determine, based on the information acquired by the product information acquisition unit 633, information judged by the product laying-stability judgement unit 634, and the information acquired by the container box information acquisition unit 635, a carrying-out position of the product in the container box corresponding to the carrying-out destination; and a carrying-out control unit 637 configured to control the carrying-out mechanism 22 or 42 to carry out the product made by the steel material cutting machine to the carrying-out position determined by the carrying-out position determination unit 636.

Among the components of the cutting system ST described above, the product information acquisition unit 633, the product laying-stability judgement unit 634, the container box information acquisition unit 635, the carrying-out position determination unit 636, and the carrying-out control unit 637 in the NC device 60, and the first carrying-out mechanism 22 and the second carrying-out mechanism 42 configure the product carrying-out device 70.

### <Operation of Cutting System ST Using Product Carrying-Out Device for Steel Material Cutting Machine According to One Embodiment>

Next, the operation executed by the cutting system ST is described. In this embodiment, near the band saw 21, the pallet P1 on which products to be delivered to a delivery destination of a first place of destination are loaded, the pallet P2 on which products to be delivered to a delivery destination of a second place of destination are loaded, and the pallet P3 on which a product to be delivered to a delivery destination of a third place of destination are loaded are installed. Further, near the circular saw machine 41, the pallet P4 on which products to be delivered to a delivery destination of a fourth place of destination are loaded, the pallet P5 on which products to be delivered to a delivery destination of a fifth place of destination are loaded, and the pallet P6 on which products to be delivered to a delivery destination of a sixth place of destination are loaded are installed. On each pallet P, container boxes (B1, B2, or B3) each having a shape determined based on the number of delivery destinations of each place of destination, the size of the product, and the like are installed.

As an example of processing to be executed by the cutting system ST, explanation will be given of processing of working, by the band saw 21, the product x to be delivered to a predetermined delivery destination of the first place of destination and then carrying out it. First, before the working and carrying-out processing of the product x is done, the operator determines the shape of the container box (container box B1, B2, or B3) for carrying out the worked product, which is to be installed on the pallet P1, based on the number of delivery destinations regarding the first place of destination, the product length, the product diameter, and the like.

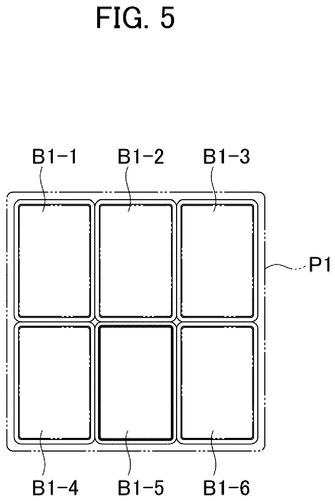

In this case, the operator determines the shape of the container box to be installed on the pallet P1 corresponding to the first place of destination as B1, and installs six corresponding container boxes B1 onto the pallet P1. FIG. 5 is a view as viewed from above of the six container boxes B1 (B1-1 to B1-6) installed on the pallet P1. Further, the operator determines the carrying-out destination of the product x to be delivered to a delivery destination X as the container box B1-5 among the container boxes B1-1 to B1-6.

Further, the operator inputs the information on the container box B1 indicating the shape of the container box installed on the pallet P1 and the information on the container box B1-5 identifying the container box determined as the carrying-out destination of the product x from the input unit 62 of the NC device 60 as setting information.

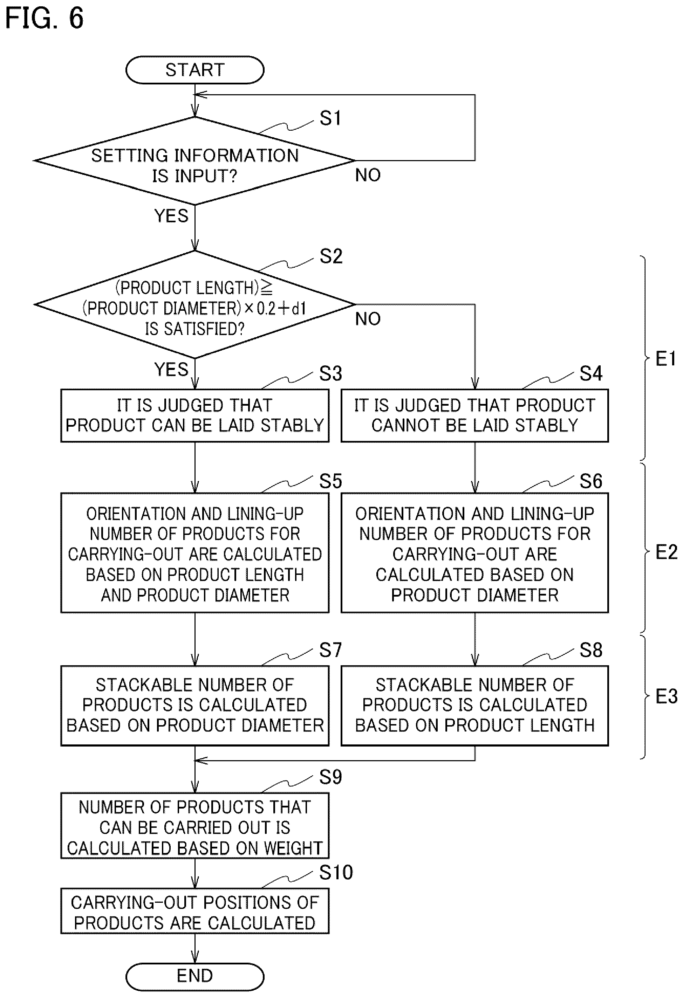

When those pieces of setting information are input, the product carrying-out device 70 determines the carrying-out positions of the products x in the container box B1-5. FIG. 6 is a flow chart illustrating processes for determining the carrying-out positions of the cut products by the product carrying-out device 70.

When the above-mentioned setting information is input ("YES" of S1), the product information acquisition unit 633 acquires, from the product information storage unit 611, information on a product length L1, a product diameter L2, and a product weight M of the product x to be processed. Next, the product laying-stability judgement unit 634 executes laying-stability judgement processing E1 of judging whether or not the product x can be laid stably under a state in which a cut surface thereof is made perpendicular to the ground surface, based on the information acquired by the product information acquisition unit 633.

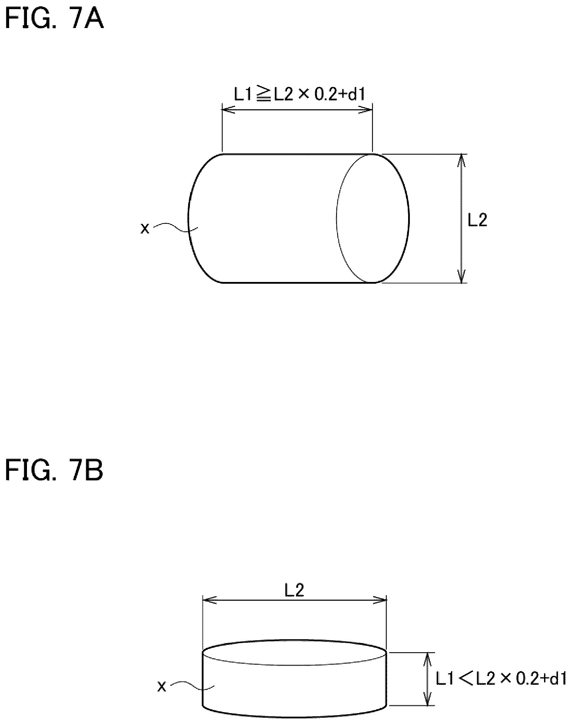

FIG. 7A illustrates an example of a product that can be laid stably to be carried out by the product carrying-out device 70. FIG. 7B illustrates an example of a product that cannot be laid stably to be carried out by the product carrying-out device 70. The product laying-stability judgement unit 634 judges that the product x can be laid stably when the product length L1 of the product x satisfies the following expression (1) (S3). $L 1 \geq L 2 \times 0.2 + d 1$ (1)

In the above-mentioned expression (1), d1 is, for example, 40 mm.

Further, the product laying-stability judgement unit 634 judges that the product x cannot be laid stably when the product length L1 of the product x does not satisfy the above-mentioned expression (1) but satisfies the following expression (2) (S4). $L 1 < L 2 \times 0.2 + d 1$ (2)

The criterion (L2×0.2+d1) for judging whether or not this product can be laid stably is set based on the experience of the operator.

Further, when the above-mentioned setting information is input, the container box information acquisition unit 635 acquires, from the container box information storage unit 612, information on a length N1, a width N2, and a height N3 of the effective inside dimensions as the shape information of the corresponding container box B1, and a loading weight upper limit value R.

Next, the carrying-out position determination unit 636 executes lining-up number calculation processing E2 of calculating an orientation of the product x and lining-up numbers of the products to be arranged on a bottom of the container box B1, based on the information acquired by the product information acquisition unit 633, the judgement result judged by the product laying-stability judgement unit 634, and the information acquired by the container box information acquisition unit 635.

In the lining-up number calculation processing E2, when the product x is judged as a product that can be laid stably in the laying-stability judgement processing E1, the carrying-out position determination unit 636 calculates, based on the product length L1 and the product diameter L2 of the product x, the orientation of the product x and the numbers of the products x to be lined up in each row/column in the container box B1 so as to arrange as many products x as possible on the bottom of the container box B1 (S5).

For example, the carrying-out position determination unit 636 determines the orientation of the product x to match the direction of the length of the container box B1, and calculates the lining-up number in each column based on the following expression (3). $N 1 / \left(L1+d2\right)$ (3)

In the above-mentioned expression (3), d2 is a margin value for the column direction in the container box B1. The value d2 is set for safely and efficiently carrying out the product x to the container box B1. The lining-up number for the column direction is a value of an integer part of a value obtained through calculation by the above-mentioned expression (3).

Further, the carrying-out position determination unit 636 calculates the lining up number in each row based on the following expression (4). $N 2 / \left(L2+d3\right)$ (4)

In the above-mentioned expression (4), d3 is a margin value for the row direction in the container box B1. The lining-up number for the row direction is a value of an integer part of a value obtained through calculation by the above-mentioned expression (4).

Further, when the product x is judged as a product that cannot be laid stably in the laying-stability judgement processing E1, the carrying-out position determination unit 636 calculates, based on the product diameter L2 of the product x, the orientation of the product x and the lining-up numbers for carrying out the product x (S6).

Specifically, the carrying-out position determination unit 636 calculates the lining-up number for the column direction based on the following expression (5). $N 1 / \left(L2+d4\right)$ (5)

In the above-mentioned expression (5), d4 is a margin value for the column direction in the container box B1. The lining-up number for the column direction is a value of an integer part of a value obtained through calculation by the above-mentioned expression (5).

Further, the carrying-out position determination unit 636 calculates the lining-up number for the row direction based on the following expression (6). $N 2 / \left(L2+d5\right)$ (6)

In the above-mentioned expression (6), d5 is a margin value for the row direction in the container box B1. The lining-up number for the row direction is a value of an integer part of a value obtained through calculation by the above-mentioned expression (6).

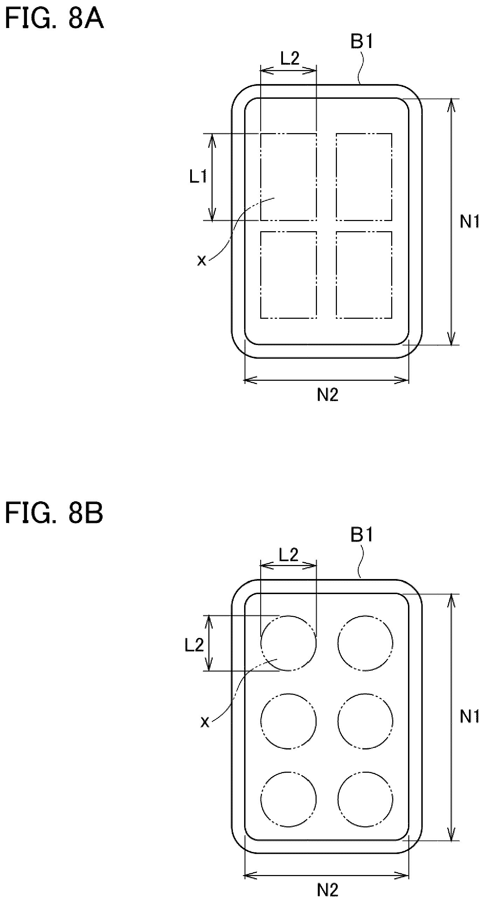

The carrying-out position determination unit 636 determines, based on the calculated lining-up numbers for the column and row directions, the carrying-out positions of the products x on the bottom of the container box B1. FIG. 8A is a view as viewed from above of an example of the carrying-out positions of the products that can be laid stably, which is determined by the carrying-out position determination unit 636 with respect to the bottom of the container box B1. FIG. 8A illustrates an example of a case in which the carrying-out position determination unit 636 calculates both of the lining-up numbers for the row and column directions as "2". FIG. 8B is a view as viewed from above of an example of the carrying-out positions of the products that cannot be laid stably, which is determined by the carrying-out position determination unit 636 with respect to the bottom of the container box B1. FIG. 8B illustrates an example of a case in which the carrying-out position determination unit 636 calculates the lining-up number for the row direction as "2" and the lining-up number for the column direction as "3".

Next, the carrying-out position determination unit 636 executes stacking number calculation processing E3 of calculating the number of the products x to be stacked in the container box B1.

In the stacking number calculation processing E3, the carrying-out position determination unit 636 calculates, when the product x is judged as a product that can be laid stably in the laying-stability judgement processing E1, the stackable number based on the product diameter L2 of the product x (S7).

Specifically, the carrying-out position determination unit 636 calculates the stackable number based on the following expression (7). $\left(N3+d6\right) / L 2$ (7)

In the above-mentioned expression (7), d6 is a margin value for the height direction in the container box B1. The stackable number is a value of an integer part of a value obtained through calculation by the above-mentioned expression (7).

Further, the carrying-out position determination unit 636 calculates, when the product x is judged as a product that cannot be laid stably in the laying-stability judgement processing E1, the stackable number based on the product length L1 of the product x (S8).

Specifically, the carrying-out position determination unit 636 calculates the stackable number based on the following expression (8). $\left(N3+d7\right) / L 1$ (8)

In the above-mentioned expression (8), d7 is a margin value for the height direction in the container box B1. The stackable number is a value of an integer part of a value obtained through calculation by the above-mentioned expression (8).

Next, the carrying-out position determination unit 636 calculates, from the loading weight upper limit value R of the container box B1 and the product weight M of the product x, the number of products x that can be carried out to the container box B1 based on the following expression (9) (S9). $R / M$ (9)

The number of products x that can be carried out to the container box B1 is a value of an integer part of a value obtained through calculation by the above-mentioned expression (9).

The carrying-out position determination unit 636 determines the carrying-out positions of the products x in the container box B1, based on the calculated orientation of the product x and the calculated lining-up numbers on the bottom of the container box B1, the stackable number of products x, and the number of products x that can be carried out to the container box B1 (S10). At this time, the carrying-out position determination unit 636 determines the carrying-out position so that the number of products x that can be carried out to the container box B1 are arranged in order from the bottom of the container box B1.

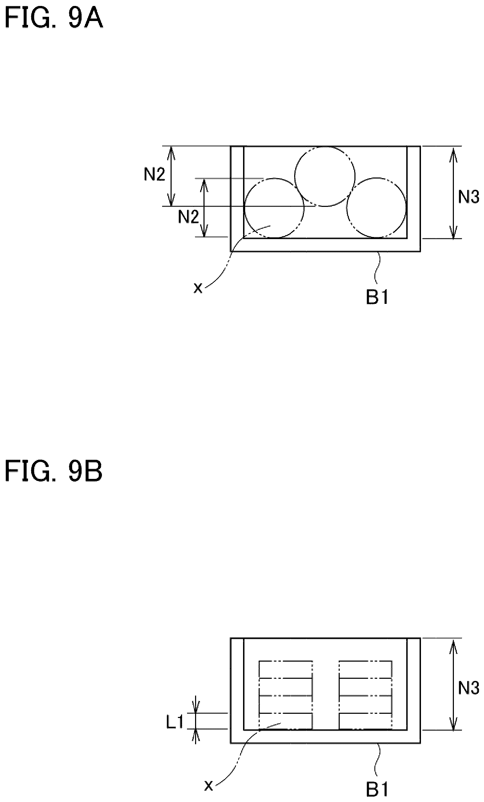

FIG. 9A is a view as viewed from the side of an example of the carrying-out positions of the products that can be laid stably, which is determined by the carrying-out position determination unit 636 with respect to the container box B1. When determining the carrying-out positions of the products that can be laid stably, the carrying-out position determination unit 636 determines the carrying-out positions of the products in a pyramid shape by reducing the lining-up number for the row direction by one every time of the stacking stage is increased by one stage. With the carrying-out position being determined as described above, the cylindrical products x can be placed in the container box B1 stably in a laid-down state. When the products are placed in a pyramid shape, the lower-stage products move so as to be spread in the lateral direction by the weight of the upper-stage product, and the products at the right and left ends of the lower stage abut against the side surfaces of the container box B1. Then, the upper-stage product is placed so as to sink between the lower-stage products. In this case, the uppermost height level of the upper-stage product becomes lower than the height level achieved when the products are stacked by the same number of stages while being stacked in line in the vertical direction. In consideration of this fact, a number slightly larger than the number calculated by the expression (8) may be set as the stackable number when determining the carrying-out positions of the products that can be laid stably. FIG. 9A illustrates an example of a case in which the carrying-out position determination unit 636 calculates the stackable number as number "2" larger than number "1" calculated by the expression (8).

FIG. 9B is a view as viewed from the side of an example of the carrying-out positions of the products that cannot be laid stably, which is determined by the carrying-out position determination unit 636 with respect to the container box B1. When determining the carrying-out positions of the products that cannot be laid stably, the carrying-out position determination unit 636 installs the cut surface of the product x to match the bottom of the container box B1 to achieve a stable state. Accordingly, the carrying-out position determination unit 636 determines the carrying-out position so as to load, both in the column direction and the row direction, the same number of products x arranged on the bottom of the container box B1 to the upper stage as well. FIG. 9B illustrates an example of a case in which the carrying-out position determination unit 636 calculates the stackable number as "4".

After the carrying-out positions of the products x are determined, the workpiece supply control unit 631 outputs, to the first crane 12 of the shelf device 10, an instruction to supply the workpiece W to be used as a work material for the products x to the first supply line 14. The first crane 12 moves on the running lanes 2 and grips the workpiece W to be processed to move the workpiece W to the first supply line 14. The first supply line 14 supplies the workpiece W moved by the first crane 12 to the first cutting unit 20 via the first relay conveyor 30.

Further, the cutting control unit 632 outputs, to the band saw 21, an execution command of the cutting work, based on the information on the product length of the product x to be processed, which is stored in the product information storage unit 611. The band saw 21 of the first cutting unit 20 executes the cutting work sequentially with respect to the workpiece W supplied by the first relay conveyor 30, based on the instruction acquired from the cutting control unit 632.

Further, the carrying-out control unit 637 outputs an instruction to carry out the product x made by the cutting work of the band saw 21 to the carrying-out position determined by the carrying-out position determination unit 636 to the first conveyance robot 222 of the first carrying-out mechanism 22. In the first conveyance robot 222, in accordance with the instruction acquired from the carrying-out control unit 637, the first gripping portion 222c grips the product x made by the cutting work of the band saw 21, the first main body portion 222a slidably moves on the first rails 221 to a position near the pallet P1, and the first arm portion 222b is operated to carry out the product x to a predetermined carrying-out position in the container box B1-5. The first conveyance robot 222 sequentially carries out the product x to the set carrying-out position every time the product x is made.

According to the above-mentioned embodiment, the product carrying-out device 70 can determine the carrying-out position for efficiently carrying out the product based on the size of the product made by the cutting work of the steel material cutting machine.

Further, the product information acquisition unit 633 of the product carrying-out device 70 acquires the information on the product weight of the product, and the container box information acquisition unit 635 acquires the information on the loading weight upper limit value indicating an upper limit value of the weight loadable on the container box. Further, the carrying-out position determination unit 636 calculates, based on the information on the product weight of the product acquired by the product information acquisition unit 633 and the information on the loading weight upper limit value acquired by the container box information acquisition unit 635, the number of products that can be carried out to the container box, and determines the carrying-out positions of the calculated number of products. With the carrying-out positions of the products in the container box being determined as described above, the product can be safely carried out within a range of the weight loadable on the container box.

Further, the carrying-out position determination unit 636 of the product carrying-out device 70 calculates, when it is judged that the product can be laid stably, the orientation of the product in the container box and the lining-up numbers in the column and row directions based on the product length and the product diameter of the product, and calculates the stackable number based on the product diameter. Further, the carrying-out position determination unit 636 calculates, when it is judged that the product cannot be laid stably, the orientation of the product in the container box and the lining-up numbers in the column and row directions based on the product diameter, and calculates the stackable number based on the product length. As described above, when the orientation of the product in the container box, the lining-up numbers in the column and row directions, and the stackable number are calculated, safe carrying-out positions of the products having good loading efficiency can be determined.

The present disclosure is not limited to this embodiment described above, and various modifications can be made thereto without departing from the technical scope of the appended claims.

The disclosure of this application relates to the subject described in Japanese Patent Application No. 2022-046937 filed on March 23, 2022.

## Claims

1. A product carrying-out device (70) for a steel material cutting machine (21, 41), comprising:
a product information acquisition unit (633) configured to acquire information on a product length, L1, and a product diameter, L2, of a product, x, made by a cutting work of a steel material cutting machine (21, 41), the product length, L1, being a length of the product, x, cut by the steel material cutting machine (21, 41) and the product diameter, L2, being a diameter of a cut surface of the product, x, cut by the steel material cutting machine (21, 41);
a product laying-stability judgement unit (634) configured to judge, based on the information acquired by the product information acquisition unit (633), that the product, x, can be laid stably under a state in which a cut surface thereof is made perpendicular to a ground surface, when the product length, L1, of the product satisfies the following expression: $L 1 \geq L 2 \times 0.2 + d 1 ,$
with d1 being a value set based on the experience of an operator;
a storage box information acquisition unit (635) configured to acquire information on a shape of a storage box, B1-B3, corresponding to a carrying-out destination of the product, x, made by the cutting work;
a carrying-out position determination unit (636) configured to determine a carrying-out position of the product, x, in the storage box, B1-B3, corresponding to the carrying-out destination based on the information acquired by the product information acquisition unit (633), information judged by the product laying-stability judgement unit (634), and the information acquired by the storage box information acquisition unit (635); and
a carrying-out control unit (637) configured to control a carrying-out mechanism (22, 42) to carry out the product, x, made by the steel material cutting machine (21,41) to the carrying-out position determined by the carrying-out position determination unit (636),
wherein the carrying-out position determination unit (636) is configured to:
calculate, when it is judged that the product can be laid stably, an orientation of the product and the number of products to be lined up in each row and column in the storage box B1 - B3 based on the product length, L1, and the product diameter, L2, of the product, and calculate the number of products to be stacked based on the product diameter, L2, the orientation of the product in the storage box, B1 - B3, being set to make the cut surface of the product perpendicular to the ground surface, and
calculate, when it is judged that the product cannot be laid stably, the orientation of the product and the number of products to be lined up in each row and column in the storage box B1 - B3 based on the product diameter, L2, and calculate the number of products to be stacked based on the product length, L1, the orientation of the product in the storage box, B1 - B3, being set to make the cut surface of the product match the bottom of the storage box, B1 - B3, to achieve a stable state.

2. The product carrying-out device (70) for the steel material cutting machine (21, 41) according to claim 1,
wherein the product information acquisition unit (633) is configured to further acquire information on a product weight of the product, x,
wherein the storage box information acquisition unit (635) is configured to further acquire information on a loading weight upper limit value indicating an upper limit value of a weight loadable on the storage box, B1-B3, and
wherein the carrying-out position determination unit (636) is configured to calculate the number of products that can be carried out to the storage box, B1-B3, based on the information on the product weight of the product, x, acquired by the product information acquisition unit (633) and the information on the loading weight upper limit value acquired by the storage box information acquisition unit (635), and to determine carrying-out positions of the calculated number of products, x.

3. A product carrying-out method for a steel material cutting machine (21, 41), comprising:
acquiring information on a product length, L1, and a product diameter, L2, of a product, x, made by a cutting work of a steel material cutting machine (21, 41), the product length, L1, being a length of the product, x, cut by the steel material cutting machine (21, 41) and the product diameter, L2, being a diameter of a cut surface of the product, x, cut by the steel material cutting machine (21, 41);
judging, based on the acquired information on the product length, L1, and the product diameter, L2, of the product, x, that the product, x, can be laid stably under a state in which a cut surface thereof is made perpendicular to a ground surface, when the product length, L1, of the product satisfies the following expression: $L 1 \geq L 2 \times 0.2 + d 1 ,$
with d1 being a value set based on the experience of an operator;
acquiring information on a shape of a storage box, B1-B3, corresponding to a carrying-out destination of the product, x, made by the cutting work;
determining a carrying-out position of the product, x, in the storage box, B1-B3, corresponding to the carrying-out destination based on the acquired information on the product length, L1, and the product diameter, L2, of the product, x, information on the shape of the storage box, B1-B3, and a judgement result of judging that the product, x, can be laid stably; and
carrying out, by a carrying-out mechanism (22, 42), the product, x, made by the steel material cutting machine (21, 41) to the determined carrying-out position, wherein,
when it is judged that the product can be laid stably, calculating an orientation of the product and the number of products to be lined up in each row and column in the storage box B1 - B3 based on the product length, L1, and the product diameter, L2, of the product, and calculating the number of products to be stacked based on the product diameter, L2, the orientation of the product in the storage box, B1 - B3, being set to make the cut surface of the product perpendicular to the ground surface, and
when it is judged that the product cannot be laid stably, calculating the orientation of the product and the number of products to be lined up in each row and column in the storage box B1 - B3 based on the product diameter, L2, and calculating the number of products to be stacked based on the product length, L1, the orientation of the product in the storage box, B1 - B3, being set to make the cut surface of the product match the bottom of the storage box, B1 - B3, to achieve a stable state.

## Patentansprüche

1. Produktaustragungsvorrichtung (70) für eine Stahlmaterialschneidemaschine (21, 41), umfassend:
eine Produktinformationserfassungseinheit (633), die dazu konfiguriert ist, Informationen über eine Produktlänge L1 und einen Produktdurchmesser L2 eines Produkts x zu erfassen, das durch einen Schneidvorgang einer Stahlmaterialschneidemaschine (21, 41) hergestellt wurde, wobei die Produktlänge L1 eine Länge des Produkts x ist, das von der Stahlmaterialschneidemaschine (21, 41) geschnitten wurde, und der Produktdurchmesser L2 ein Durchmesser einer Schnittfläche des Produkts x ist, das von der Stahlmaterialschneidemaschine (21, 41) geschnitten wurde;
eine Produktlagestabilitätsbeurteilungseinheit (634), die dazu konfiguriert ist, basierend auf den von der Produktinformationserfassungseinheit (633) erfassten Informationen zu beurteilen, ob das Produkt x in einem Zustand, in dem seine Schnittfläche senkrecht zu einer Bodenfläche steht, stabil abgelegt werden kann, wenn die Produktlänge L1 des Produkts den folgenden Ausdruck erfüllt: $L 1 \geq L 2 \times 0,2 + d 1 ,$
wobei d1 ein Wert ist, der basierend auf der Erfahrung eines Bedieners festgelegt wird;
eine Aufbewahrungsboxinformationserfassungseinheit (635), die dazu konfiguriert ist, Informationen über eine Form einer Aufbewahrungsbox B1-B3 zu erfassen, die dem Austragungszielort des durch den Schneidvorgang hergestellten Produkts x entspricht;
eine Austragungspositionsbestimmungseinheit (636), die dazu konfiguriert ist, eine Austragungsposition des Produkts x in der Aufbewahrungsbox B1-B3 entsprechend dem Austragungszielort basierend auf den von der Produktinformationserfassungseinheit (633) erfassten Informationen, den von der Produktlagestabilitätsbeurteilungseinheit (634) beurteilten Informationen und den von der Aufbewahrungsboxinformationserfassungseinheit (635) erfassten Informationen zu bestimmen; und
eine Austragungssteuerungseinheit (637), die dazu konfiguriert ist, einen Austragungsmechanismus (22, 42) dazu zu steuern, das von der Stahlmaterialschneidemaschine (21, 41) hergestellte Produkt x an der von der Austragungspositionsbestimmungseinheit (636) bestimmten Austragungsposition auszutragen,
wobei die Austragungspositionsbestimmungseinheit (636) zu Folgendem konfiguriert ist:
Berechnen, wenn beurteilt wird, dass das Produkt stabil abgelegt werden kann, einer Ausrichtung des Produkts und der Anzahl von Produkten, die in jeder Zeile und Spalte in der Aufbewahrungsbox B1 - B3 angeordnet werden sollen, basierend auf der Produktlänge L1 und dem Produktdurchmesser L2 des Produkts, und Berechnen der Anzahl von zu stapelnden Produkten basierend auf dem Produktdurchmesser L2, wobei die Ausrichtung des Produkts in der Aufbewahrungsbox B1 - B3 so festgelegt wird, dass die Schnittfläche des Produkts senkrecht zu der Bodenfläche steht, und
Berechnen, wenn beurteilt wird, dass das Produkt nicht stabil abgelegt werden kann, der Ausrichtung des Produkts und der Anzahl von Produkten, die in jeder Zeile und Spalte in der Aufbewahrungsbox B1 - B3 angeordnet werden sollen, basierend auf dem Produktdurchmesser L2, und Berechnen der Anzahl der zu stapelnden Produkte basierend auf der Produktlänge L1, wobei die Ausrichtung des Produkts in der Aufbewahrungsbox B1 - B3 so festgelegt wird, dass die Schnittfläche des Produkts mit dem Boden der Aufbewahrungsbox B1 - B3 übereinstimmt, um einen stabilen Zustand zu erreichen.

2. Produktaustragungsvorrichtung (70) für die Stahlmaterialschneidemaschine (21, 41) nach Anspruch 1,
wobei die Produktinformationserfassungseinheit (633) dazu konfiguriert ist, des Weiteren Informationen über ein Produktgewicht des Produkts x zu erfassen,
wobei die Aufbewahrungsboxinformationserfassungseinheit (635) dazu konfiguriert ist, des Weiteren Informationen über den oberen Grenzwert für das Ladungsgewicht zu erfassen, der einen oberen Grenzwert eines Gewichts angibt, das auf die Aufbewahrungsbox B1-B3 ladbar ist, und
wobei die Austragungspositionsbestimmungseinheit (636) dazu konfiguriert ist, die Anzahl von Produkten, die in die Aufbewahrungsbox B1-B3 ausgetragen werden können, basierend auf den von der Produktinformationserfassungseinheit (633) erfassten Informationen über das Produktgewicht des Produkts x und den von der Aufbewahrungsboxinformationserfassungseinheit (635) erfassten Informationen über den oberen Grenzwert des Ladungsgewichts zu berechnen, und die Austragungspositionen der berechneten Anzahl von Produkten x zu bestimmen.

3. Produktaustragungsverfahren für eine Stahlmaterialschneidemaschine (21, 41), umfassend:
Erfassen von Informationen über eine Produktlänge L1 und einen Produktdurchmesser L2 eines Produkts x, das durch einen Schneidvorgang einer Stahlmaterialschneidemaschine (21, 41) hergestellt wurde, wobei die Produktlänge L1 eine Länge des Produkts x ist, das von der Stahlmaterialschneidemaschine (21, 41) geschnitten wurde, und der Produktdurchmesser L2 ein Durchmesser einer Schnittfläche des Produkts x ist, das von der Stahlmaterialschneidemaschine (21, 41) geschnitten wurde;
Beurteilen, basierend auf den erfassten Informationen über die Produktlänge L1 und den Produktdurchmesser L2 des Produkts x, dass das Produkt x in einem Zustand, in dem seine Schnittfläche senkrecht zu einer Bodenfläche steht, stabil abgelegt werden kann, wenn die Produktlänge L1 des Produkts den folgenden Ausdruck erfüllt: $L 1 \geq L 2 \times 0,2 + d 1 ,$
wobei d1 ein Wert ist, der basierend auf der Erfahrung eines Bedieners festgelegt wird;
Erfassen von Informationen über eine Form einer Aufbewahrungsbox B1-B3, die dem Austragungszielort des durch den Schneidvorgang hergestellten Produkts x entspricht;
Bestimmen einer Austragungsposition des Produkts x in der Aufbewahrungsbox B1-B3, entsprechend dem Austragungszielort basierend auf den Informationen über die Produktlänge L1 und den Produktdurchmesser L2 des Produkts x, den Informationen über die Form der Aufbewahrungsbox B1-B3 und ein Beurteilungsergebnis der Beurteilung dass das Produkt x stabil abgelegt werden kann; und
Austragen, durch einen Austragungsmechanismus (22, 24) des von der Stahlmaterialschneidemaschine (21, 41) hergestellten Produkts x an die bestimmte Austragungsposition, wobei
wenn beurteilt wird, dass das Produkt stabil abgelegt werden kann, Berechnen einer Ausrichtung des Produkts und die Anzahl von Produkten, die in jeder Zeile und Spalte in der Aufbewahrungsbox B1 - B3 angeordnet werden sollen, basierend auf der Produktlänge L1 und dem Produktdurchmesser L2 des Produkts, und Berechnen der Anzahl von zu stapelnden Produkten basierend auf dem Produktdurchmesser L2, wobei die Ausrichtung des Produkts in der Aufbewahrungsbox B1 - B3 so festgelegt wird, dass die Schnittfläche des Produkts senkrecht zu der Bodenfläche steht, und
wenn beurteilt wird, dass das Produkt nicht stabil abgelegt werden kann, Berechnen der Ausrichtung des Produkts und der Anzahl von Produkten, die in jeder Zeile und Spalte in der Aufbewahrungsbox B1 - B3 angeordnet werden sollen, basierend auf dem Produktdurchmesser L2, und Berechnen der Anzahl der zu stapelnden Produkte basierend auf der Produktlänge L1, wobei die Ausrichtung des Produkts in der Aufbewahrungsbox B1 - B3 so festgelegt wird, dass die Schnittfläche des Produkts mit dem Boden der Aufbewahrungsbox B1 - B3 übereinstimmt, um einen stabilen Zustand zu erreichen.

## Revendications

1. Dispositif d'évacuation de produits (70) destiné à une machine (21, 41) de découpe de matériau d'acier, comprenant :
une unité d'acquisition d'informations de produit (633) configurée pour acquérir des informations sur une longueur de produit, L1, et un diamètre de produit, L2, d'un produit, x, fabriqué par un travail de découpe d'une machine (21, 41) de découpe de matériau d'acier, la longueur de produit, L1, étant une longueur du produit, x, découpé par la machine (21, 41) de découpe de matériau d'acier et le diamètre de produit, L2, étant un diamètre d'une surface de découpe du produit, x, découpé par la machine (21, 41) de découpe de matériau d'acier ;
une unité de jugement de stabilité de dépose de produits (634) configurée pour juger, sur la base des informations acquises par l'unité d'acquisition d'informations de produit (633), que le produit, x, peut être déposé de façon stable dans un état dans lequel une surface de découpe de celui-ci est rendue perpendiculaire à une surface du sol, lorsque la longueur de produit, L1, du produit satisfait à l'expression suivante : $L 1 \geq L 2 \times 0,2 + d 1 ,$
d1 étant une valeur fixée sur la base de l'expérience d'un opérateur ;
une unité d'acquisition d'informations de bac de stockage (635) configurée pour acquérir des informations sur la forme d'un bac de stockage, B1 à B3, correspondant à une destination d'évacuation du produit, x, fabriqué par le travail de découpe ;
une unité de détermination de position d'évacuation (636) configurée pour déterminer une position d'évacuation du produit, x, dans le bac de stockage, B1 à B3, correspondant à la destination d'évacuation sur la base des informations acquises par l'unité d'acquisition d'informations de produit (633), informations jugées par l'unité de jugement de stabilité de dépose (634), et des informations acquises par l'unité d'acquisition d'informations de bac de stockage (635) ; et
une unité de commande d'évacuation (637) configurée pour commander un mécanisme d'évacuation (22, 42) afin d'évacuer le produit, x, fabriqué par la machine (21, 41) de découpe de matériau d'acier jusqu'à la position d'évacuation déterminée par l'unité de détermination de position d'évacuation (636),
dans lequel l'unité de détermination de position d'évacuation (636) est configurée pour :
calculer, quand il est jugé que le produit peut être déposé de façon stable, une orientation du produit et le nombre de produits à aligner dans chaque ligne et chaque colonne du bac de stockage B1 à B3 sur la base de la longueur de produit, L1, et du diamètre de produit, L2, du produit, et calculer le nombre de produits à empiler sur la base du diamètre de produit, L2, l'orientation du produit dans le bac de stockage, B1 à B3, étant fixée pour que la surface de découpe du produit soit perpendiculaire à la surface du sol, et
calculer, quand il est jugé que le produit ne peut pas être déposé de façon stable, l'orientation du produit et le nombre de produits à aligner dans chaque ligne et chaque colonne du bac de stockage B1 à B3 sur la base du diamètre de produit, L2, et calculer le nombre de produits à empiler sur la base de la longueur de produit, L1, l'orientation du produit dans le bac de stockage, B1 à B3, étant fixée pour que la surface de découpe du produit corresponde au fond du bac de stockage, B1 à B3, afin de parvenir à un état stable.

2. Dispositif d'évacuation de produits (70) destiné à la machine (21, 41) de découpe de matériau d'acier selon la revendication 1,
dans lequel l'unité d'acquisition d'informations de produit (633) est configurée pour acquérir en outre des informations sur un poids de produit du produit, x,
dans lequel l'unité d'acquisition d'informations de bac de stockage (635) est configurée pour acquérir, en outre, des informations sur une valeur limite supérieure de poids de chargement indiquant une valeur limite supérieure d'un poids qu'il est possible de charger dans le bac de stockage, B1 à B3, et
dans lequel l'unité de détermination de position d'évacuation (636) est configurée pour calculer le nombre de produits qui peuvent être évacués vers le bac de stockage, B1 à B3, sur la base des informations sur le poids de produit du produit, x, acquises par l'unité d'acquisition d'informations de produit (633) et des informations sur la valeur limite supérieure de poids de chargement acquises par l'unité d'acquisition d'informations de bac de stockage (635), et pour déterminer des positions d'évacuation du nombre de produits, x, calculé.

3. Procédé d'évacuation de produits destiné à une machine (21, 41) de découpe de matériau d'acier, comprenant :
l'acquisition d'informations de produit sur une longueur de produit, L1, et un diamètre de produit, L2, d'un produit, x, fabriqué par un travail de découpe d'une machine (21, 41) de découpe de matériau d'acier, la longueur de produit, L1, étant une longueur du produit, x, découpé par la machine (21, 41) de découpe de matériau d'acier et le diamètre de produit, L2, étant un diamètre d'une surface de découpe du produit, x, découpé par la machine (21, 41) de découpe de matériau d'acier ;
le jugement, sur la base des informations acquises sur la longueur de produit, L1, et le diamètre de produit, L2, du produit, x, que le produit, x, peut être déposé de façon stable dans un état dans lequel une surface de découpe de celui-ci est rendue perpendiculaire à une surface du sol, lorsque la longueur de produit, L1, du produit satisfait à l'expression suivante : $L 1 \geq L 2 \times 0,2 + d 1 ,$
d1 étant une valeur fixée sur la base de l'expérience d'un opérateur ;
l'acquisition d'informations sur la forme d'un bac de stockage, B1 à à B3, correspondant à une destination d'évacuation du produit, x, fabriqué par le travail de découpe ;
la détermination d'une position d'évacuation du produit, x, dans le bac de stockage, B1 à B3, correspondant à la destination d'évacuation sur la base des informations acquises sur la longueur de produit, L1, et le diamètre de produit, L2, du produit, x, d'informations sur la forme du bac de stockage, B1 à B3, et d'un résultat de jugement consistant à juger que le produit, x, peut être déposé de façon stable ; et
l'évacuation, par un mécanisme (22, 42) d'évacuation, du produit, x, fabriqué par la machine (21, 41) de découpe de matériau d'acier jusqu'à la position d'évacuation déterminée,
quand il est jugé que le produit peut être déposé de façon stable, le calcul d'une orientation du produit et du nombre de produits à aligner dans chaque ligne et chaque colonne du bac de stockage B1 à B3 sur la base de la longueur de produit, L1, et du diamètre de produit, L2, du produit, et le calcul du nombre de produits à empiler sur la base du diamètre de produit, L2, l'orientation du produit dans le bac de stockage, B1 à B3, étant fixée pour que la surface de découpe du produit soit perpendiculaire à la surface du sol, et
quand il est jugé que le produit ne peut pas être déposé de façon stable, le calcul de l'orientation du produit et du nombre de produits à aligner dans chaque ligne et chaque colonne du bac de stockage B1 à B3 sur la base du diamètre de produit, L2, et le calcul du nombre de produits à empiler sur la base de la longueur de produit, L1, l'orientation du produit dans le bac de stockage, B1 à B3, étant fixée pour que la surface de découpe du produit corresponde au fond du bac de stockage, B1 à B3, afin de parvenir à un état stable.
